# NEUE EUROPÄISCHE PATENTSCHRIFT

(11) **EP 1 830 236 B2**
(45) Veröffentlichungstag und Bekanntmachung des Hinweises auf die Entscheidung über den Einspruch: **08.08.2018**
(45) Hinweis auf die Patenterteilung: 09.09.2015
(21) Anmeldenummer: 07002171.2
(22) Anmeldetag: 01.02.2007
(51) Int. Cl.: G05B 19/418, H04L 12/40, H04L 12/417

(54) **Verfahren zum Betreiben eines Netzwerkes**
Method for operating a network
Procédé destiné au fonctionnement d'un réseau

(30) Priorität: 10.02.2006 DE 102006006509
(43) Veröffentlichungstag der Anmeldung: 05.09.2007
(73) Patentinhaber: ROBERT BOSCH GMBH, 70469 Stuttgart (DE)
(72) Erfinder: Schultze, Stephan, Dr., 97816 Lohr am Main (DE); Tchekler, Alexander, 97845 Neustadt (DE); Ackermann, Roland, 97816 Lohr am Main (DE); Noack, Gerald, 97816 Lohr am Main (DE)

(56) Entgegenhaltungen:
- EP-A1- 0 415 169
- WO-A-02/49289
- WO-A-03/049366
- DE-A1- 19 503 213
- JP-A- 4 120 932
- JP-B- 7 071 349
- P. LUTZ: "Ethernet motion technology: The SERCOS interface" THE INDUSTRIAL ETHERNET BOOK, [Online] 31. Juli 2004 (2004-07-31), XP002444842 Internet Gefunden im Internet: URL:http://ethernet.industrial-networking. com/articles/articledisplay.asp?id=196> [gefunden am 2007-05-10]
- UNKNOWN: "TABLE OF CONTENT FOR THE INDUSTRIAL ETHERNET BOOK, ISSUE 21, JULY 2004" TABLE OF CONTENT FOR THE INDUSTRIAL ETHERNET BOOK, ISSUE 21, JULY 2004, [Online] 31. Juli 2004 (2004-07-31), Seite 1, XP002444843 Internet Gefunden im Internet: URL:http://ethernet.industrial-networking. com/articles/articles.asp> [gefunden am 2007-05-10]
- INTERESSENSGEMEINSCHAFT SERCOS INTERFACE E V: "SERCOS-III (Dritte Generation SERCOS interface)" INTERNET CITATION, [Online] April 2004 (2004-04), XP002356906 Gefunden im Internet: URL:http://www.sercos.de/pdf/SERCOS-III_V1 34d_public.pdf> [gefunden am 2005-12-01]
- SCHEMM, EBERHARD: "Innovation durch Kombination" PRAXIS PROFILINE - SERCOS INTERFACE, 31. Mai 2004 (2004-05-31), Seiten 26-28, XP002444455 Vogel Verlag, Würzburg ISBN: 3-8259-1926-9
- ANONYMOUS: "Sercos III (Version vom 05.01.2006)" WIKIPEDIA DEUTSCHLAND, [Online] 5. Januar 2006 (2006-01-05), XP002444456 Gefunden im Internet: URL:http://de.wikipedia.org/w/index.php?ti tle=SERCOS_III&oldid=12276910> [gefunden am 2007-04-20]
- HECK P ET AL: "MEDIA ORIENTED SYNCHRONOUS TRANSFER - A NETWORK PROTOCOL FOR HIGH QUALITY, LOW COST TRANSFER OF SYNCHRONOUS, ASYNCHRONOUS, AND CONTROL DATA ON FIBER OPTIC" PREPRINTS OF PAPERS PRESENTED AT THE AES CONVENTION, Bd. 4551, Nr. 4551, September 1997 (1997-09), Seiten 1-10,5PAGES, XP001121596
- CENA G ET AL: "Performance analysis of byteflight networks" FACTORY COMMUNICATION SYSTEMS, 2004. PROCEEDINGS. 2004 IEEE INTERNATIONAL WORKSHOP ON VIENNA, AUSTRIA SEPT. 22-24, 2004, PISCATAWAY, NJ, USA,IEEE, 22. September 2004 (2004-09-22), Seiten 157-166, XP010756391 ISBN: 0-7803-8734-1
- SEIDL D ET AL: "APPLICATION OF POFS IN DATA LINKS OF MOBILE SYSTEMS" PROCEEDINGS. PLASTIC OPTICAL FIBRES AND APPLICATIONS CONFERENCE, 5. Oktober 1998 (1998-10-05), Seiten 205-211, XP009003845
- JANSSEN, DIRK; BÜTTNER HOLGER: "EtherCAT - Der Ethernet Feldbus" ELEKTRONIK, [Online] Bd. 25, 2003, XP002444904 www.elektroniknet.de Gefunden im Internet: URL:ftp://ftp.beckhoff.com/Document/Presse /ek_23_25_03.pdf> [gefunden am 2007-07-27]
- "INDUSTRIELLE KOMMUNIKATION FUER DIE AUTOMATISIERUNG" INTERNET CITATION, [Online] April 2001 (2001-04), XP002242082 Gefunden im Internet: URL:http://lhc-div.web.cern.ch/IndCtrl/GUA PI/CD-SimaticNet/doc/docbrowser/> [gefunden am 2003-05-19]
- UNKNOWN: "SoftSERCANS SERCOS interface Master-Anbindung für PC-basierende Steuerungssysteme Funktionsbeschreibung: Version 01"[Online] 17. Juni 1999 (1999-06-17), XP002461035 Gefunden im Internet: URL:http://www.sercos.de/pdf/28770201.pdf> [gefunden am 2007-12-04]

## Beschreibung

Die Erfindung betrifft Verfahren zum Betreiben eines Netzwerkes sowie entsprechend ausgebildete Netzwerke.

### Stand der Technik

Die Bedeutung von Netzwerken oder Netzwerkdiensten sind in jüngster Zeit ständig gestiegen. Neben der allgemein bekannten Verwendung als Kommunikationsplattform, beispielsweise Internet, ist ebenfalls die Verwendung im industriellen Umfeld von wachsender Bedeutung, z.B. bei untereinander vernetzten Steuerungs- oder Automatisierungsanlagen.

Vor allem im industriellen Anwendungsbereich ist eine zuverlässige und möglichst effektive, d.h. schnelle und zuverlässige Netzwerkverbindung der einzelnen Teilnehmer untereinander von größter Bedeutung, um Probleme in oder gar Ausfälle der Produktion zu vermeiden. Zur Gewährleistung einer möglichst effektiven Kommunikation sollte die Menge der im Rahmen der Kommunikation auszutauschenden bzw. zu übertragenden Daten möglichst gering sein.

Die US 5,586,251 betrifft ein System zur Überwachung von Netzwerksegmenten, welches eine Vielzahl von identischen Überwachungsinstrumenten ("COLEM"), von denen jeweils eine mit einem Netzwerksegment verbunden ist, aufweist. Zur gegenseitigen Überwachung sendet jedes COLEM regelmäßig eine Statusnachricht an alle anderen Überwachungsinstrumente. Alle Statusnachrichten sind identisch.

Ein von der ODVA spezifiziertes Kommunikationssystem unter dem Namen CPIsync verwendet eine Uhrzeitsynchronisation in allen Nebenstationen eines eine Hauptstation und Nebenstationen aufweisenden Netzwerkes. Das System weist eine Hauptstation und Nebenstationen, auf. Zusätzlich zu einer Kommunikation zwischen Hauptstation und Nebenstation ist auch eine Kommunikation zwischen Nebenstationen vorgegehen (sogenannte Querkommunikation). Sendet nun eine Nebenstation Daten an eine weitere Nebenstation, fügt sie den zu übertragenden Daten eine Zeitangabe in Form einer Uhrzeit bei, wobei diese Zeit angibt, zu welcher Zeit übertragene Daten aufgefrischt wurden. Ferner werden Daten betreffend eine Auffrischzykluszeit hinzugefügt. Der Empfänger muss hierbei stets damit rechnen, dass sich die Auffrischzykluszeit ändern kann. Auch ist eine derartige Kommunikation nicht auf eine feste konstante Zykluszeit beschränkt. Dies führt dazu, dass neben den eigentlichen Daten jeweils weitere Zusatzdaten übertragen werden müssen, wodurch die Datenübertragung insgesamt sehr ineffizient wird. Zudem muss der Empfänger (Consumer) der jeweils übertragenen Daten eine entsprechende Rechenleistung vorhalten, um die wechselnden Zykluszeiten bewältigen zu können.

Ein weiteres Kommunikationsverfahren ist unter dem Namen SERCOS III bekannt. Dieses Kommunikationssystem für Netzwerke, die eine Hauptstation und Nebenstationen aufweisen, spezifiziert sowohl eine Kommunikation zwischen der Hauptstation und den jeweiligen Nebenstationen, als auch eine Querkommunikation, d.h. eine Kommunikation zwischen den Nebenstationen.

Die Merkmale des SERCOS-III-Standard ist beispielsweise in P. Lutz, "Ethernet Motion Technology: The SERCOS Interface", The Industrial Ethernet Book vom 31. Juli 2004 (http://ethernet.industrial-networking.com/artictes/artictedisplay.asp?id=196) oder in der Dokumentation der Interessensgemeinschaft SERCOS Interface e.V., "SERCOS-III (Dritte Generation SERCOS Interface)" vom April 2004 (http://www.sercos.de/pdf/SERCOS-III V134d_public.pdf) dokumentiert. Hiernach ist ein Verfahren zum Betreiben eines Netzwerks mit einer Hauptstation und wenigstens zwei Nebenstationen vorgesehen; wobei die Hauptstation mit den wenigstens zwei Nebenstationen kommuniziert, und die wenigstens zwei Nebenstationen untereinander zur Bereitstellung einer Querkommunikation kommunizieren. Die Querkommunikation erfolgt dabei mittels Telegrammen, die im Rahmen von Kommunikationszyklen generiert werden.

Die WO 03/049366 A offenbart ein ähnliches Kommunikationssystem, das als Prozessautomatisierungssystem mit einem Messumformer und mindestens einem Messwertgeber realisiert ist. Das System arbeitet im Master-Slave-Übertragungsverfahren, wobei eine Querkommunikation vorgesehen ist.

Diese- Kommunikationsschemata erweisen sich für bestimmte Anwendungen als relativ langsam.

Bei der Kommunikation zwischen der Hauptstation und den Nebenstationen wird ein Mechanismus spezifiziert, bei dem die Datenauffrischrate der gesendeten Daten durch die Hauptstation vorgegeben wird. Hierbei gibt es neben der Kommunikationszykluszeit eine sogenannte NC-Zykluszeit, welche die Zykluszeit, mit der die Hauptstation ihre Daten an die Nebenstationen auffrischt, beschreibt. Neben diesen beiden Zykluszeiten gibt es eine Auffrisch-Signalisierung im Datentelegramm der Hauptstation an jede Nebenstation, in der die Hauptstation signalisiert, wann ihre gesendeten Daten aufgefrischt wurden (sogenanntes "IPO-Sync-Bit"). Anhand der Auffrischsignalisierung können die Nebenstationen ihre Regel - bzw. Steueralgorithmen optimieren und auf die NC-Zykluszeit synchronisieren.

Diese Signalisierung der Auffrischung von Daten ist in früheren Versionen des SERCOS-Standards implementiert (online-Dokument "SoftSERCANS SERCOS interface Master-Anbindung für PC-basierende Steuerungssysteme Funktionsbeschreibung: Version 01" vom 17. Juni 1999).

Ferner offenbart die JP 07 071349 B eine Zusammenfassung von Messwerten zu Gruppen, wobei ein einzelnes, so genanntes Change-of-State-Bit Änderungen des Inhalts einer Gruppe anzeigt und eine Masterstation durch Auswertung dieses Bits nur geänderte Gruppen genauer inspizieren muss.

Die JP 04 1200932 A offenbart eine Mitteilung über Änderungen überwachter Werte an eine Masterstation, wobei lediglich im Fall einer Änderung entsprechender Werte die geänderten Werte übertragen werden.

Die beschriebenen Verfahren bzw. Systeme benötigen zur Gewährleistung einer zuverlässigen Kommunikation relativ viel Zeit, was eine Verwendung in Systemen, die sehr schnelle Verbindungen benötigen, wie beispielsweise Echtzeitsysteme, behindert bzw. unmöglich macht.

Vor diesem Hintergrund werden in der vorliegenden Erfindung Verfahren zum Betreiben eines Netzwerks, sowie entsprechend ausgebildete Netzwerke gemäß den unabhängigen Patentansprüchen vorgestellt. Vorteilhafte Ausgestaltungen ergeben sich aus den jeweiligen Unteransprüchen und der nachfolgenden Beschreibung.

### Vorteile der Erfindung

Die erfindungsgemäßen Verfahren ermöglichen dadurch, dass die konsumierenden Nebenstationen die Auffrisch-Zykluszeit und/oder die Auffrischzeitpunkte der produzierten Querkommunikationsdaten kennen, eine sehr schnelle und effektive Kommunikation in Netzwerken mit einer Hauptstation und wenigstens zwei Nebenstationen. Hierzu trägt auch die direkte Kommunikation zwischen einzelnen Nebenstationen (Querkommunikation) bei. Da bevorzugt für die Kommunikation zwischen Nebenstationen von der Hauptstation generierte Datenübertragungstelegramme bzw. Telegramme verwendet werden, kann die Datenstruktur sehr einfach gehalten werden, womit eine schnelle und effektive Kommunikation möglich ist. Erfingdungsgemäß kann z.B., gegebenenfalls nach einer anfänglichen Synchronisation der jeweiligen Nebenstationen bzw. der Hauptstation, auf eine Signalisierung der Auffrischung verzichtet werden. Die Kenntnis der Zykluszeit dient beispielsweise dazu, interne Verarbeitungen, beispielsweise eine Interpolation (Feininterpolation) oder eine Extrapolation durchzuführen. Eine derartige Feininterpolation stellte eine typische Anwendung eines IPO-Sync-Bits dar.

Vorteilhafte Ausgestaltungen der erfindungsgemäßen Verfahren bzw. der erfindungsgemäßen Netzwerke sind Gegenstand der Unteransprüche.

Die erfindungsgemäß verwendeten Telegramme sind besonders bevorzugt von der Hauptstation und/oder wenigstens einer der Nebenstationen generierbar. Eine Generierung der Telegramme durch die Hauptstation ermöglicht in der Regel eine besonders einfache und gleichmäßige Kommunikationsstruktur. Andererseits gewährleistet eine Generierung von Telegrammen durch wenigstens eine der Nebenstationen im Falle eines (partiellen) Ausfalls der Hauptstation, dass Telegramme zur Aufrechterhaltung der Kommunikation weiter generiert werden können.

Gemäß einer bevorzugten Ausführungsform des erfindungsgemäßen Verfahrens werden die Querkommunikationsdaten jeweils in einem eigenen Datentelegrammen übertragen. Hierbei existieren für eine spezifische Querkommunikation, d.h. eine Kommunikation zwischen zwei bestimmten Nebenstationen, ei gene Telegramme. Diese Telegramme können von der Hauptstation und/oder einer der Nebenstationen generiert werden.

Es ist jedoch bevorzugt, dass die Querkommunikationsdaten in einem gemeinsamen Datentelegramm mit den Kommunikationsdaten zwischen Hauptstation und den wenigstens zwei Nebenstationen übertragen werden oder in einem gemeinsamen Datentelegramm, welches nur Querkommunikationsdaten mehrerer oder sämtlicher Nebenstationen enthält, übertragen werden. Eine derartige Zusammenfassung von Querkommunikationsdaten in einem Telegramm erweist sich insbesondere in einem Fehlerfall, beispielsweise einer Unterbrechung einer die Stationen verbindenden Leitung, als vorteilhaft. In einem derartigen Fall ist z.B. zwischen bestimmten Nebenstationen eine direkte Kommunikation nicht mehr möglich. Eine Kommunikation wird in diesem Fall über die Hauptstation zu erfolgen haben. Hierzu muss die Hauptstation in einem Modus betrieben werden, dass Daten von einem ersten Port beispielsweise mittels Umkopieren an einen zweiten Port übertragen werden. Ein Umkopieren von Daten ist in einem gemeinsamen Telegramm erleichtert, da die Daten hier blockweise kopiert werden können, und nicht einzelne Telegramme kopiert werden müssen. Insbesondere müssen die Daten hierbei nicht aus einem "Misch-Telegramm" herausgesucht werden, welches beispielsweise nicht ausschließlich Querkommunikationsdaten enthält. In diesem Fall ist es denkbar, eine besonders geeignete Hardware-Unterstützung zum Umkopieren von Daten bereitzustellen.

Es erweist es sich als besonders vorteilhaft, dass die Querkommunikationsdaten im Rahmen eines vorhandenen Datentelegramms mitübertragen werden. Hierbei handelt es sich vorteilhafterweise um Telegramme, die für eine Kommunikation zwischen der Hauptstation und den Nebenstationen, bzw. den Nebenstationen und der Hauptkommunikation verwendet werden. Derartige Telegramme finden beispielsweise in Ipanet-Anwendungen Verwendung.

Gemäß einer besonders bevorzugten Ausführungsform des erfindungsgemäßen Verfahrens bzw. des erfindungsgemäßen Netzwerkes sind die Querkommunikationsverbindungen als logische Punkt-Zu-Punkt-Verbindungen ausgebildet. Mit dieser Maßnahme, bei der gegebenenfalls Signalpfade bei der Kommunikation zwischen zwei Nebenstationen über weitere Nebenstationen geführt werden, ist eine direkte Kommunikation zwischen Nebenstationen möglich, ohne dass eine explizite bzw. direkte Verdrahtung zwischen diesen Nebenstationen existieren muss.

Als besonders vorteilhaft erweist sich die Ausbildung des erfindungsgemäßen Netzwerkes derart, dass die Querkommunikationsverbindungen logische Verbindungen von einem Punkt (d. h. einer Nebenstation) zu mehreren Punkten (d. h. mehreren anderen Nebenstationen) sind bzw. umfassen. Eine derartige Kommunikation wird auch als "Multicast-Kommunikation" bezeichnet, d.h. eine als Producer dienende Nebenstation versorgt eine Anzahl von als Consumer dienenden Nebenstationen mit Daten.

Gemäß einer besonders bevorzugten Ausführungsform des erfindungsgemäßen Verfahrens wird im Rahmen der Kommunikation zwischen den Nebenstationen eine Auffrischung der Querkommunikationsdaten signalisiert. Dies kann beispielsweise dadurch bewerkstelligt werden, dass ein Daten- bzw. Kommunikationstelegramm eine entsprechende Information für eine oder mehrere Nebenstationen aufweist. Mit dieser Maßnahme ist insbesondere einer der wesentlichen Nachteile des Standes der Technik überwindbar, dass nämlich herkömmlicherweise die Producerzykluszeit, d. h., die Häufigkeit, mit der eine Nebenstation ein Datum erzeugt, gleich der Kommunikationszykluszeit ist. Mit der dargestellten Maßnahme ist es beispielsweise möglich, dass eine Auffrischung eines Querkommunikationsdatums nur nach jedem n-ten Kommunikationszyklus erfolgt. Mit der Signalisierung einer derartigen Auffrischung kann gewährleistet werden, dass ein Consumer, d.h. eine Nebenstation, für welche das Querkommunikationsdatum bestimmt ist, nur bei'den Telegrammen zur Entgegennahme des Querkommunikationsdatums aktiv wird, in denen eine Auffrischung dieses Datums angezeigt bzw. signalisiert wird.

Bevorzugt wird die Signalisierung der Auffrischung der Querkommunikationsdaten von der diese Daten produzierenden Nebenstation durchgeführt. Diese Maßnahme erweist sich als besonders effektiv, da beispielsweise eine Signalisierung einer Auffrischung von Querkommunikationsdaten einer weiteren Nebenstation mitgeteilt werden kann, ohne dass die Hauptstation hierfür in Anspruch genommen werden muss.

Zweckmäßigerweise erfolgt eine derartige Signalisierung im Rahmen eines Verwaltungsfeldes des verwendeten Telegramms.

Es erweist sich als besonders zweckmäßig, die Signalisierung der Auffrischung mittels eines alternierenden Bits, eines sogenannten Toggle-Bits durchzuführen.

Es ist gleichfalls denkbar, die Signalisierung der Auffrischung mittels eines ein- oder mehrbittigen Zählers durchzuführen. Mit diesen Maßnahmen ist eine zuverlässige Signalisierung einer Auffrischung eines für eine Nebenstation bestimmten Datums bereitstellbar.

Vorteilhafterweise wird die Signalisierung der Auffrischung für jedes produzierte Datenfeld individuell gesetzt. Hierdurch ist es möglich, innerhalb einer Nebenstation unterschiedliche Producerzykluszeiten zu realisieren. Beispielsweise kann eine Nebenstation, die Daten für weitere Nebenstationen erzeugt, für diese Nebenstationen individuelle Auffrischungszyklen realisieren bzw. signalisieren.

Zweckmäßigerweise bestehen die Querkommunikationsdaten aus einem oder mehreren einzelnen Werten. Mit derart strukturierten Querkommunikationsdaten ist eine besonders effektive Kommunikation realisierbar.

Als besonders vorteilhaft erweist sich, wenn die konsumierenden Nebenstationen ihre jeweilige Datenverarbeitung der empfangenen produzierten Daten auf den signalisieren bzw. bekannten Auffrischzeitpunkt hin optimieren.

Zweckmäßigerweise ist eine Auffrisch-Zykluszeit ein vielfaches der Kommunikationszykluszeit. Hiermit ist die zeitliche Verarbeitung insbesondere von Querkommunikationsdaten optimierbar.

Bevorzugt ist hierbei, dass die Kommunikationszykluszeit der größte gemeinsame Teiler der jeweiligen Auffrisch-Zykluszeiten ist. Bevorzugte Technologien, auf denen das erfindungsgemäße Verfahren bzw. das erfindungsgemäße Netzwerk basieren, sind die Ethernet-Technologie und die SERCOS III Technologie. Insbesondere mit derartigen Technologien sind die erfindungsgemäßen Verfahren bzw. erfindungsgemäß ausgestaltete Netzwerke zur Echtzeitkommunikation verwendbar.

Bevorzugte Anwendungen der Erfindung sind die Kommunikation in Automatisierungssystemen sowie die Kommunikation zwischen Steuerungen.

### Figurenbeschreibung

Im Folgenden sollen die Erfindung und deren Vorteile anhand der beigefügten Zeichnung näher erläutert werden. In dieser zeigen bzw. zeigt
die Figuren 1a, 1b zwei unterschiedliche Topologien, mit denen eine bevorzugte Ausführung eines erfindungsgemäßen Verfahrens bzw. eines erfindungsgemäßen Netzwerkes vorteilhaft realisierbar sind, und
Figur 2 einen bevorzugten Telegrammaufbau, mit dem eine erfindungsgemäße Kommunikation zwischen Hauptstationen und Nebenstationen sowie eine Querkommunikation zwischen den Nebenstationen realisierbar ist.

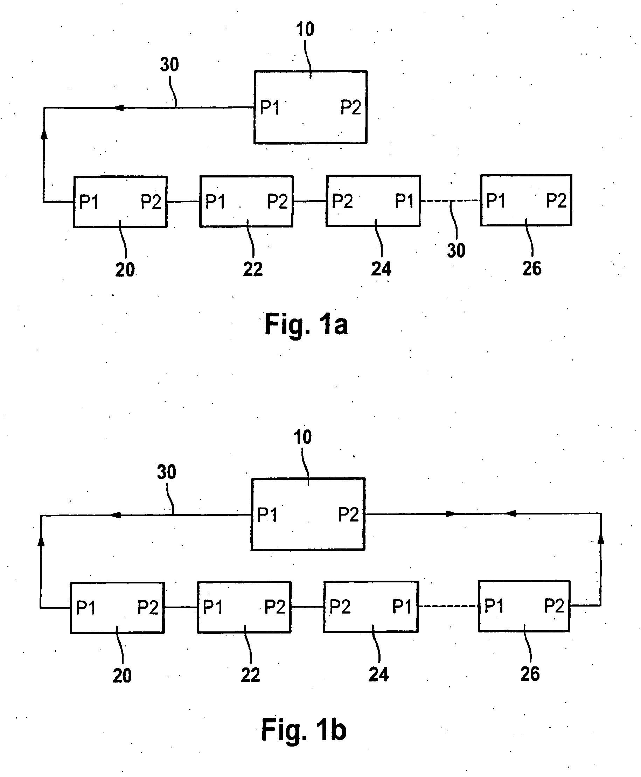

Figur 1a zeigt ein Netzwerk mit einer linearen Struktur. Das Netzwerk weist eine Hauptstation (Master) 10 sowie eine Anzahl von Nebenstationen (Slaves) 20, 22, 24, 26 auf. Die Anzahl der dargestellten Nebenstationen ist rein beispielhaft gewählt. Typischerweise weisen derartige Netzwerke eine größere Zahl von Nebenstationen auf.

Eine Kommunikation findet zwischen der Hauptstation 10 und den jeweiligen Nebenstationen 20 bis 26 statt. Ferner findet eine Querkommunikation, d.h. eine Kommunikation der Nebenstationen untereinander zwischen den Nebenstationen 20 bis 26 statt. Die Kommunikation erfolgt in beide Richtungen, d.h. von der Hauptstation 10 weg, und auf diese zu, über eine Leitung 30. Die Kommunikation über die einzige Leitung 30 erfolgt mittels Telegrammen, welche in der dargestellten Struktur von der Hauptstation generiert werden und nacheinander zu den Nebenstationen gelangen. Die Leitung 30 ist vorzugsweise als Ethernet-Kabel ausgebildet. Derartige Telegramme weisen, wie allgemein bekannt, in der Regel wenigstens einen Header sowie Datenfelder für zu übertragende Daten auf. Die Telegramme sind in einer bevorzugten Ausgestaltung Ethernet-Telegramme. Für die Kommunikation zwischen der Hauptstation 10 und den Nebenstationen 20 bis 26 ist es möglich, Daten von der Hauptstation für die Nebenstation in einem gesonderten Telegramm zu übertragen. Entsprechendes gilt für Daten von den Nebenstationen zu der Hauptstation, welche ebenfalls in einem gesonderten Telegramm übertragen werden können. Bei dem letztgenannten Telegramm fügt jede Nebenstation ihre Daten in ein für sie vorgesehenes Datenfeld in dem Telegramm ein.

Die Nebenstation 26 ist in der dargestellten linearen Struktur mit einer Datenübertragungsspiegelungseinrichtung ausgebildet, so dass (von der Hauptstation generierte) an der Nebenstatiön 26 ankommende Telegramme in umgekehrter Richtung über die Datenübertragungsleitung 30 an die Hauptstation 10 zurück übertragen werden können.

Neben der Kommunikation zwischen der Hauptstation 10 und den Nebenstationen 20 bis 26 ist erfindungsgemäß eine Querkommunikation zwischen den Nebenstationen vorgesehen. Die Querkommunikationsdaten, welche beispielsweise eine der Nebenstationen für wenigstens eine weitere der Nebenstationen produziert, können zweckmäßigerweise in dafür vorgesehene Datenfelder in den genannten Telegrammen, die von der Hauptstation generiert werden, eingefügt werden.

Die Kommunikation erfolgt, wie erwähnt, im Rahmen eines Kommunikationszyklus. Ein Kommunikationszyklus umfasst die Menge an Telegrammen, die während einer Kommunikationszykluszeit bzw. -periode von der Hauptstation generiert bzw. zurückerhalten werden. Die Telegramme können umfassen Telegramme, in denen Daten von der Hauptstation zu den Nebenstationen übertragen werden ("MDT") sowie Telegramme, in denen Daten von den Nebenstationen zur Hauptstation übertragen werden ("AT"). Diese beiden Arten von Telegrammen können auch zu einer einzigen Telegrammart zusammengefasst werden.

Die Daten, die von einer Nebenstation produziert werden, und für eine weitere Nebenstation bestimmt sind, können in sämtliche der erwähnten Telegrammarten eingefügt werden. Da Auffrischzyklen für Daten, welche von der Hauptstation an eine Nebenstation bzw. umgekehrt, oder auch von einer Nebenstation zu einer weiteren Nebenstation übertragen werden, typischerweise größer sind als die Kommunikationszykluszeit, können mehrere aufeinanderfolgende Telegramme in aufeinanderfolgenden Kommunikationszyklen die gleichen Daten enthalten. Um die Datenverarbeitung durch einen jeweiligen Empfänger, d.h. die Hauptstation oder eine der Nebenstationen, zu erleichtern, ist es erfindungsgemäß vorgesehen, dass in einem Telegramm, in dem eine Änderung bzw. Auffrischung eines Datums vorliegt, eine entsprechende Signalisierung für den Empfänger enthalten ist. Somit wird der Empfänger z. B. in die Lage versetzt, lediglich bei Mitteilung einer entsprechenden Signalisierung aktiv zu werden. Ein konkrete Ausführungsform derartiger Telegramme einschließlich der genannten Signalisierungen wird unter Bezugnahme auf die weitere, in Figur 1b dargestellte Topologie erläutert.

Eine bevorzugte Ausführungsform des erfindungsgemäßen Verfahrens wird nun anhand der in Figur 1b dargestellten Topologie beschreiben. Diese zeigt eine Ringstruktur, wie sie beispielsweise in dem SERCOS III Kommunikationssystem implementiert ist. Das SERCOS III Kommunikationssystem weist hierbei einen gegenläufigen Doppelring auf, d.h. die Ports P1 und P2 dienen sowohl als Eingangs- und Ausgangsport.

Die entsprechende einzige Leitung zur Verbindung der Haupt- und Nebenstationen ist wiederum mit 30 bezeichnet. Die Hauptstation ist wiederum mit 10, die Nebenstationen mit 20 bis 26 bezeichnet. Die Signalflussrichtungen innerhalb der Leitung 30 sind durch Pfeile markiert. Die Leitung 30 ist zweckmäßigerweise als Full-Duplex-Kabel, wie dies im Bereich des Ethernet üblich ist, ausgebildet.

Die Kommunikation findet auch hier zyklisch in Kommunikationszyklen statt. Die Zeitdauer zwischen dem Beginn zweier Kommunikationszyklen, d.h. beispielsweise dem jeweils ersten einer Gruppe von Telegrammen, wird als Kommunikationszykluszeit bezeichnet. Bei dieser Ausführungsform umfasst ein Kommunikationszyklus wenigstens ein MDT und ein AT. Die Telegramme werden, in der Darstellung der Figur 1, zunächst auf die Nebenstation 20 gegeben, welches in Signalflussrichtung an die nächste Nebenstation, hier Nebenstation 22, weiterreicht, usw. Im Falle von Telegrammen des Typs MDT empfangen die Nebenstationen die jeweils für sie bestimmten Daten. Die Nebenstationen stellen hierbei sogenannte Consumer dar. Im Falle von Telegrammen des Typs AT werden Daten, die von einer Nebenstation produziert werden, auf die Hauptstation übertragen. Entsprechende Telegramme können bei der dargestellten Ringstruktur zunächst auf die Nebenstation 26 gegeben und von dort in umgekehrter Richtung weitergeleitet werden.

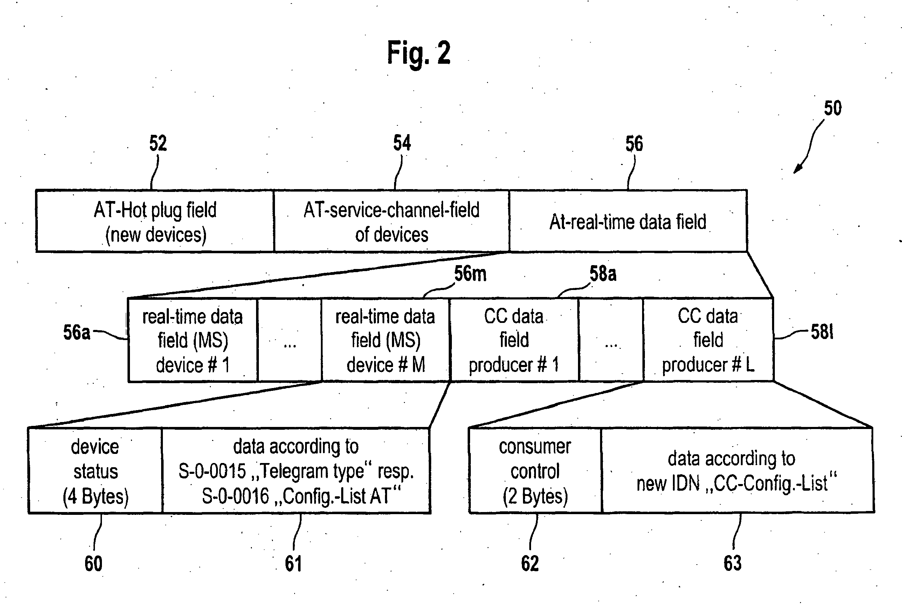

Es ist besonders bevorzugt, die Daten, die von einer Nebenstation zu einer weiteren Nebenstation übertragen werden sollen, im Rahmen der Telegramme des Typs AT zu übertragen. Dies wird weiter unten unter Bezugnahme auf Figur 2 weiter beschrieben werden.

Die Hauptstation 10 sendet und empfängt Daten (in Form von Telegrammen), reicht aber keine Daten direkt weiter. Somit ist eine zwei Datenübertragungsrichtungen aufweisende Doppelringstruktur notwendig, wenn gewährleistet werden soll, dass jede Nebenstation an jede weiter Nebenstation Daten übertragen können soll.

Abstrahiert ist die Topologie der Kommunikation, d.h. hier die Ringstruktur, nicht erheblich, da nur die zyklische Kommunikation in Kommunikationszyklen wesentlich ist. Die Kommunikationszyklen sind hierbei zweckmäßigerweise streng zeitzyklisch, und besitzen im Betrieb eine konstante Kommunikationszykluszeit.

Erfindungsgemäß können, wie erwähnt, die Nebenstationen direkt miteinander kommunizieren. Jede Nebenstation besitzt somit einen Signalpfad zu jeder anderen Nebenstation. Wie in Figur 1b) dargestellt, ist dies beispielsweise dadurch realisierbar, dass die Signalpfade (über die einzige Leitung 30) über weitere Nebenstationen gebildet werden, die dann die Daten weiterreichen. Abstrahiert wird die Kommunikation durch eine Datenübertragungskopplung jeglicher Art zwischen den Nebenstationen dargestellt.

Nebenstationen können sowohl als Erzeuger bzw. Producer einer Information (Producer), sowie als Konsumenten einer Information (Consumer) ausgebildet sein.

Es erweist sich als zweckmäßig, dass innerhalb eines von der Hauptstation 10 generierten Datenübertragungstelegramms, insbesondere vom Typ AT, mehrere von Nebenstationen produzierte Informationen enthalten sind, d.h. es können mehrere direkte Kommunikationsverbindungen zwischen Nebenstationen in einem Telegramm übertragen werden.

Wie erwähnt findet die Kommunikation in Kommunikationszyklen mit Hilfe von Datenübertragungstelegrammen statt. Diese Zyklen können beispielsweise, wie bei dem SERCOS III Kommunikationssystem, einen konstanten Aufbau bezüglich der zeitlichen Abfolge der auszutauschenden Datentelegramme besitzen.

Die Zykluszeit der Kommunikation ist dabei nicht notwendigerweise gleich der Auffrischrate der auszutauschenden Datentelegramm-Inhalte, insbesondere der Datentelegramm-Inhalte, die eine der Nebenstationen als Producer für eine weitere der in Nebenstationen als Consumer generiert (sogenannte Producer-Zykluszeit). Beispielsweise kann die Kommunikationszykluszeit eine ms betragen, eine Auffrischrate eines auszutauschenden Datums (Producer-Zykluszeit) jedoch 4 ms.

Ein Empfänger (Consumer) eines derartigen Datums, beispielsweise eine der Nebenstationen 20 bis 26, kennt zunächst nicht den Zeitpunkt, zu dem sich ein von einer anderen Nebenstation oder auch der Hauptstation (Producer) gesendete Wert aufgefrischt wurde.

Abstrahiert handelt es sich um eine Datenübertragung mit größerer Zykluszeit als der Kommunikationszykluszeit. Die Datenauffrisch-Zykluszeit ist hierbei notwendigerweise ein ganzzahliges Vielfaches der Kommunikationszykluszeit.

Unter Bezugnahme auf Figur 2 wird nun ein bevorzugter Telegrammaufbau beschrieben. Wie bereits erwähnt, sind wesentliche Aspekte der Erfindung die Querkommunikation sowie die Mitteilung einer Datenauffrischung für den jeweiligen Empfänger bzw. Consumer.

Es sei ferner erwähnt, dass die entsprechenden Daten sowohl in Telegrammen des Typs MDT als auch des Typs AT enthalten sein können. Auch ein umfassender Datentelegrammtyp, in dem Charakteristika der Typen MDT und AT zusammengefasst sind, wäre hierfür geeignet.

Der nachfolgende Telegrammaufbau bezieht sich jedoch auf ein Telegramm des Typs AT, welcher in diesem Zusammenhang bevorzugt wird.

Das Telegramm ist in Figur 2 insgesamt mit 50 bezeichnet. Es weist drei Bereiche auf, nämlich ein AT-Hot-Plug-Field 52, einen AT-Service-Channel-Field 54 sowie ein AT-Real-Time-Data-Field 56 auf. Die eigentlichen zyklisch übertragenen Daten, die zwischen einer Hauptstation und den Nebenstationen bzw. zwischen den einzelnen Nebenstationen zu übertragen sind, sind in dem Bereich 56 enthalten.

Die Bereiche 52 und 54 enthalten Verwaltungs- bzw. Protokolldaten, und werden hier nicht weiter erläutert. Es sei lediglich angemerkt, dass in dem AT-Service-Channel-Field 54 auch Daten von einer Nebenstation (Slave) zu der Hauptstation (Master) übertragen werden können.

Der als Echtzeitdatenfeld ausgebildete Bereich 56 weist eine Anzahl von Datenfeldern 56a bis 56m für Daten, die von den jeweiligen Nebenstationen zur Hauptstation übertragen werden sollen auf. Zweckmäßigerweise ist für jede Nebenstation ein derartiges Datenfeld vorgesehen.

Ferner weist der Bereich 56 Datenfelder 58a bis 581 auf, in denen Daten zur Übertragung zwischen den Nebenstationen enthalten sind. Zweckmäßigerweise ist auch hier für jede individuelle Querkommunikation, d.h. für jede Übertragung zwischen zwei spezifischen Nebenstationen, ein eigenes Datenfeld vorgesehen.

Ein derartiges Telegramm 10 wird von der Hauptstation generiert und entlang der Leitung 30 in einer der beiden Datenübertragungsrichtungen übertragen. Hierbei fügt jede Nebenstation ihre für die Hauptstation vorgesehenen Daten in das hier zugeordnete Datenfeld 56, und für eine weitere Nebenstation vorgesehene Daten in ein entsprechendes Datenfeld 58 ein.

Es sei angemerkt, dass die Datenfelder 58a bis 58e sowohl eine Punkt-Zu-Punkt Kommunikation als auch eine Kommunikation zwischen mehreren Nebenstationen darstellen können. Im Falle einer Punkt-Zu-Punkt Kommunikation ist zwei Nebenstationen ein spezielles Datenfeld zugeordnet. Es sei angemerkt, dass für den Fall, dass eine Kommunikation zwischen zwei Nebenstationen in beide Richtungen erfolgt, zwei Telegramme vorzusehen sind, die jeweils ein Feld 58 für eine Datenübertragung zwischen diesen beiden Nebenstationen aufweisen. Eines dieser Telegramme wird in der Darstellung der Figur 1b im Uhrzeigersinn, und das andere der Telegramme gegen den Uhrzeigersinn übertragen.

Im Falle einer Kommunikation an mehrere Nebenstationen ist ein Feld 58 beispielsweise einer ersten Nebenstation 20 als Producer, und weiteren Nebenstationen 22, 24, 26 als Consumer zugeordnet.

Dadurch, dass in einem Telegramm des Typs AT alle AT-Daten an jeder Nebenstation empfangbar sind (beispielsweise aufgrund der gegenläufigen Ringtopologie) kann jede Nebenstation die an sie gerichteten Daten empfangen.

Beispielhaft sei davon ausgegangen, dass eine Nebenstation 1 bis n Datenblöcke im AT zur Querkommunikation produziert. Jeder Datenblock besteht aus 1 bis k einzelnen Werten (beispielsweise Lageistwert, Momentenistwert usw.) und einem Verwaltungsfeld. Dies in der Figur 2 für die Datenfelder 56 bzw. 58 anhand der Felder 60, 61 bzw. 62, 63 dargestellt.

Beispielsweise weist ein Echtzeitdatenfeld 56 ein Verwaltungsfeld 60 auf, in dem beispielsweise eine Auffrischung der entsprechenden Werte, die in dem Datenfeld 61 enthalten sind, signalisiert wird. Entsprechendes ist bezüglich der Datenfelder 58 mittels eines Verwaltungsfeldes 62 und der Datenfelder 63 realisierbar.

Die Signalisierung einer Auffrischung kann beispielsweise mittels eine getoggelten Bits erfolgen. Zweckmäßigerweise kennt hierbei ein Consumer bzw. Empfänger von Daten eine entsprechende Auffrisch-Zykluszeit. Die Kommunikationszyklusdauer ist vorteilhafterweise der größte gemeinsame Teiler sämtlicher Auffrisch-Zykluszeiten.

Es seien in diesem Zusammenhang drei Optionen bezüglich der Auffrisch-Zykluszeiten genannt: Zunächst ist es möglich, einen Auffrisch-Zyklus nebenstationsspezifisch auszubilden, d. h. der Auffrisch-Zyklus ist in einer Nebenstation für alle von der Nebenstation produzierten Daten bzw. Datenfelder 58 identisch. Andererseits ist es auch möglich, den Auffrisch-Zyklus producerdatenspezifisch auszubilden, d. h. der Auffrisch-Zyklus in einer Nebenstation ist für jedes von der Nebenstation produzierte Datenfeld 58 gegebenenfalls unterschiedlich.

Es sei ferner auf die Möglichkeit einer Synchronisation mehrerer Producer (datenerzeugender Nebenstationen) durch einen Consumer (datenempfangende Nebenstation), beispielsweise im Zusammenhang einer Arbeitsraumüberwachung, hingewiesen: Durch Aussendung einer Anfrage bzw. eines Request mit "toggelndem IPO" werden von den Producern die entsprechenden Daten gesendet.

Im Zusammenhang mit der Arbeitsraumüberwachung sei angemerkt, dass hierbei mehrere Achsen in Kombination betrachtet werden müssen. Das heisst, die Überwachung benötigt hierzu aktuelle Ist-Werte von unterschiedlichen Producern zum gleichen Zeitpunkt. Hierzu kann sie mit einem eigenen Datenfeld, das nur eine Request-Information beinhaltet, die anderen Producer gezielt steuern.

## Patentansprüche

1. Verfahren zum Betreiben eines Netzwerkes mit einer Hauptstation (10) und wenigstens zwei Nebenstationen (20, 22, 24, 26), wobei die Hauptstation (10) mit den wenigstens zwei Nebenstationen (20, 22, 24, 26) kommuniziert, und die wenigstens zwei Nebenstationen (20, 22, 24, 26) untereinander zur Bereitstellung einer Querkommunikation kommunizieren,
wobei die Querkommunikation mittels Telegrammen (50), die im Rahmen von Kommunikationszyklen generiert werden, erfolgt,
**dadurch gekennzeichnet, dass**
konsumierende bzw. datenempfangende Nebenstationen Auffrisch-Zykluszeiten und/oder Auffrisch-Zeitpunkte produzierter Querkommunikationsdaten kennen.

2. Verfahren nach Anspruch 1, **dadurch gekennzeichnet, dass** eine Auffrisch-Zykluszeit ein Vielfaches der Kommunikationszykluszeit ist.

3. Verfahren nach Anspruch 1 oder 2, **dadurch gekennzeichnet, dass** die Querkommunikation mittels Telegrammen, die von der Hauptstation und/oder wenigstens einer der Nebenstationen generiert werden, erfolgt.

4. Verfahren nach einem der vorstehenden Ansprüche, **dadurch gekennzeichnet, dass** die Querkommunikationsdaten in einem eigenen Datentelegramm übertragen werden.

5. Verfahren nach einem der Ansprüche 1 bis 3, **dadurch gekennzeichnet, dass** die Querkommunikationsdaten in einem gemeinsamen Datentelegramm mit den Kommunikationsdaten zwischen Hauptstation und den wenigstens zwei Nebenstationen bzw. den wenigstens zwei Nebenstationen und der Hauptstation übertragen werden oder einem gemeinsamen, lediglich Querkommunikationsdaten enthaltenden Telegrammen übertragen werden.

6. Verfahren nach einem der Ansprüche 1 bis 3, **dadurch gekennzeichnet, dass** die Querkommunikationsdaten im Rahmen eines vorhandenen Datentelegramms mitübertragen werden.

7. Verfahren nach einem der vorstehenden Ansprüche, **dadurch gekennzeichnet, dass** die Querkommunikationsverbindungen als logische Punkt-zu-Punkt-Verbindungen ausgebildet sind.

8. Verfahren nach einem der vorstehenden Ansprüche, **dadurch gekennzeichnet, dass** die Querkommunikationsverbindungen logische Verbindungen von einer Station (10, 20, 22, 24, 26) zu mehreren anderen Stationen sind bzw. umfassen.

9. Verfahren nach einem der vorstehenden Ansprüche , **dadurch gekennzeichnet, dass** im Rahmen der Kommunikation zwischen den Nebenstationen eine Auffrischung der Querkommunikationsdaten signalisiert wird.

10. Verfahren nach Anspruch 9, **dadurch gekennzeichnet, dass** die Signalisierung der Auffrischung der Querkommunikationsdaten von diese Daten produzierenden Nebenstationen durchgeführt wird.

11. Verfahren nach Anspruch 9 oder 10, **dadurch gekennzeichnet, dass** die Signalisierung im Rahmen eines Verwaltungsfeldes des verwendeten Telegramms erfolgt.

12. Verfahren nach einem der Ansprüche 9 oder 10, **dadurch gekennzeichnet, dass** die Signalisierung der Auffrischung mittels eines alternierenden Bits (Toggle-Bit) durchgeführt wird.

13. Verfahren nach einem der vorstehenden Ansprüche, **dadurch gekennzeichnet, dass** die Signalisierung der Auffrischung für jedes produzierte Datenfeld individuell gesetzt wird.

14. Netzwerk mit einer Hauptstation (10) und wenigstens zwei Nebenstationen (20, 22, 24, 26), wobei Mittel (30, 50) zur Gewährleistung einer Kommunikation der Hauptstation (10) mit den wenigstens zwei Nebenstationen (20, 22, 24, 26) vorgesehen sind, wobei ferner Mittel zur Gewährleistung einer Kommunikation zwischen den wenigstens zwei Nebenstationen (20, 22, 24, 26) zur Bereitstellung einer Querkommunikation vorgesehen sind,
mit Telegrammen (50) zur Bereitstellung der Querkommunikation, die im Rahmen von Kommunikationszyklen generierbar sind,
**gekennzeichnet durch** Mittel zur Durchführung eines Verfahrens gemäß wenigstens einem der vorstehenden Ansprüche 1 bis 13.

## Claims

1. Method for operating a network having a master station (10) and at least two slave stations (20, 22, 24, 26), the master station (10) communicating with the at least two slave stations (20, 22, 24, 26), and the at least two slave stations (20, 22, 24, 26) communicating with one another for the purpose of providing cross communication, wherein the cross communication is carried out using messages (50) which are generated during communication cycles, **characterized in that** consuming or data-receiving slave stations are aware of refresh cycle times and/or refresh times of produced cross-communication data.

2. Method according to Claim 1, **characterized in that** a refresh cycle time is a multiple of the communication cycle time.

3. Method according to Claim 1 or 2, **characterized in that** the cross communication is carried out using messages which are generated by the master station and/or at least one of the slave stations.

4. Method according to one of the preceding claims, **characterized in that** the cross-communication data are transmitted in a separate data message.

5. Method according to one of Claims 1 to 3, **characterized in that** the cross-communication data are transmitted in a common data message containing the communication data between the master station and the at least two slave stations or between the at least two slave stations and the master station or are transmitted in a common message containing only cross-communication data.

6. Method according to one of Claims 1 to 3, **characterized in that** the cross-communication data are concomitantly transmitted within an existing data message.

7. Method according to one of the preceding claims, **characterized in that** the cross-communication connections are in the form of logical point-to-point connections.

8. Method according to one of the preceding claims, **characterized in that** the cross-communication connections are or comprise logical connections from one station (10, 20, 22, 24, 26) to a plurality of other stations.

9. Method according to one of the preceding claims, **characterized in that** a refresh of the cross-communication data is signalled during communication between the slave stations.

10. Method according to Claim 9, **characterized in that** the refresh of the cross-communication data is signalled by slave stations producing said data.

11. Method according to Claim 9 or 10, **characterized in that** the signalling is carried out in a management field of the message used.

12. Method according to either of Claims 9 and 10, **characterized in that** the refresh is signalled using an alternating bit (toggle bit).

13. Method according to one of the preceding claims, **characterized in that** the signalling of the refresh is individually set for each data field produced.

14. Network having a master station (10) and at least two slave stations (20, 22, 24, 26), with means (30, 50) for ensuring communication between the master station (10) and the at least two slave stations (20, 22, 24, 26) being provided, and with means for ensuring communication between the at least two slave stations (20, 22, 24, 26) for the purpose of providing cross communication also being provided, having messages (50) for providing the cross communication, which messages can be generated during communication cycles, **characterized by** means for carrying out a method according to at least one of the preceding Claims 1 to 13.

## Revendications

1. Procédé pour faire fonctionner un réseau comprenant une station principale (10) et au moins deux stations secondaires (20, 22, 24, 26), la station principale (10) communiquant avec les au moins deux stations secondaires (20, 22, 24, 26) et les au moins deux stations secondaires (20, 22, 24, 26) communiquant entre elles en vue de fournir une communication transversale, dans lequel la communication transversale s'effectue au moyen de télégrammes (50) qui sont générés dans le cadre de cycles de communication, **caractérisé en ce que** les stations secondaires consommatrices ou réceptrices de données reconnaissent des données de communication transversale produisant des temps de cycle de rafraîchissement et/ou des instants de rafraîchissement.

2. Procédé selon la revendication 1, **caractérisé en ce qu'**un temps de cycle de rafraîchissement est un multiple du temps de cycle de communication.

3. Procédé selon la revendication 1 ou 2, **caractérisé en ce que** la communication transversale s'effectue au moyen de télégrammes qui sont générés par la station principale et/ou au moins l'une des stations secondaires.

4. Procédé selon l'une des revendications précédentes, **caractérisé en ce que** les données de communication transversale sont transmises dans un télégramme de données propre.

5. Procédé selon l'une des revendications 1 à 3, **caractérisé en ce que** les données de communication transversale sont transmises dans un télégramme de données commun avec les données de communication entre la station principale et les au moins deux stations secondaires ou les au moins deux stations secondaires et la station principale, ou sont transmises dans un télégramme commun contenant uniquement des données de communication transversale.

6. Procédé selon l'une des revendications 1 à 3, **caractérisé en ce que** les données de communication transversale sont transmises conjointement dans le cadre d'un télégramme de données présent.

7. Procédé selon l'une des revendications précédentes, **caractérisé en ce que** les liaisons de communication transversale sont configurées sous la forme de liaisons logiques point à point.

8. Procédé selon l'une des revendications précédentes, **caractérisé en ce que** les liaisons de communication transversale sont ou comprennent des liaisons logiques d'une station (10, 20, 22, 24, 26) vers plusieurs autres stations.

9. Procédé selon l'une des revendications précédentes, **caractérisé en ce qu'**un rafraîchissement des données de communication transversale est signalé dans le cadre de la communication entre les stations secondaires.

10. Procédé selon la revendication 9, **caractérisé en ce que** la signalisation du rafraîchissement des données de communication transversale est effectuée par les stations secondaires qui produisent ces données.

11. Procédé selon la revendication 9 ou 10, **caractérisé en ce que** la signalisation s'effectue dans le cadre d'un champ de gestion du télégramme utilisé.

12. Procédé selon l'une des revendications 9 ou 10, **caractérisé en ce que** la signalisation du rafraîchissement est effectuée au moyen d'un bit à alternance (bit de basculement).

13. Procédé selon l'une des revendications précédentes, **caractérisé en ce que** la signalisation du rafraîchissement est activée individuellement pour chaque champ de données produit.

14. Réseau comprenant une station principale (10) et au moins deux stations secondaires (20, 22, 24, 26), des moyens (30, 50) étant prévus pour garantir une communication de la station principale (10) avec lesdites stations secondaires (20, 22, 24, 26), des moyens étant en outre prévus pour garantir une communication entre lesdites stations secondaires (20, 22, 24, 26) en vue de fournir une communication transversale,
comprenant des télégrammes (50) destinés à fournir la communication transversale, lesquels peuvent être générés dans le cadre de cycles de communication, **caractérisé par** des moyens destinés à mettre en oeuvre procédé selon au moins l'une des revendications précédentes 1 à 13.
